# FASCICULE DE BREVET EUROPEEN

(11) **EP 2 867 837 B1**
(45) Date de publication et mention de la délivrance du brevet: **08.08.2018**
(21) Numéro de dépôt: 13734134.3
(22) Date de dépôt: 11.06.2013
(51) Int. Cl.: H04W 12/06, G06Q 20/32, H04L 29/06

(54) **SYSTÈME DE TRANSMISSION SÉCURISÉE DE DONNÉES NUMÉRIQUES**
SYSTEM ZUM SICHEREN ÜBERTRAGEN VON DIGITALEN DATEN
SYSTEM FOR THE SECURE TRANSMISSION OF DIGITAL DATA

(30) Priorité: 29.06.2012 FR 1256217; 05.06.2013 FR 1355175
(43) Date de publication de la demande: 06.05.2015
(73) Titulaire: Nepting, 34000 Montpellier (FR)
(72) Inventeur: AUBRY-TRIAL, Martine, F-34130 Saint Aunes (FR); COTTE, Jean-François, F-34800 Peret (FR); DALMAS, Jean-Paul, F-34670 Baillargues (FR); RENAULT, Frédéric, F-34000 Montpellier (FR)
(74) Mandataire: Rhein, Alain
(86) Numéro de dépôt international: PCT/FR2013/051352
(87) Numéro de publication internationale: WO 2014/001677

(56) Documents cités:
- EP-A1- 1 965 596
- WO-A1-2010/052722
- WO-A1-2011/080273

## Description

La présente invention entre dans le domaine de la communication, en particulier de la transmission sécurisée de données numériques au travers d'un réseau de communication.

L'invention concerne ainsi un système de transmission sécurisée de données numériques au travers d'un réseau de communication.

L'invention trouvera une application préférentielle, mais aucunement limitative, dans le cadre d'échanges transactionnels, en particulier de transactions bancaires.

L'expansion récente des terminaux portables et personnels, comme les téléphones cellulaires de type « Smartphone » (pour téléphone intelligent), connectés à un réseau de communication, en particulier informatique, tel Internet, a entrainé une évolution des pratiques en matière de paiement au moyen d'une carte bancaire.

Rappelons qu'actuellement, on a recours au standard adopté internationalement pour les cartes à puces bancaires : l'EMV pour « EUROPAY MASTERCARD VISA ». Ce standard spécifie le format des données bancaires stockées et échangées, le traitement associé et les contraintes pour les éléments de paiement stockant de telles données, que ce soit une carte à puce ou bien un élément mémoire sécurisé d'un téléphone cellulaire.

En parallèle, l'arrivée de technologies de communication sans fil a permis de mettre en oeuvre des protocoles de transmission de données entre une carte à puce bancaire ou un terminal portable personnel, tel un téléphone cellulaire, propre à un utilisateur et un terminal de paiement détenu par un commerçant, au moment d'une transaction bancaire située dans un point de vente.

Un exemple de protocole actuellement utilisé est le NFC pour « Near Field Communication » (communication en champ proche). Cette technologie a recours à la technologie de radio-identification RFID (pour « Radio Frequency IDentification ») et permet l'envoi et la réception de données à courtes portées, d'environ une dizaine de centimètres, émises sous forme d'ondes à hautes fréquences, en particulier 13,56 Mégahertz (MHz).

Une telle technologie est déjà utilisée avec des cartes à puces bancaires spécifiques, autorisant le paiement sans contact (« contactless »), au moyen d'un TPE pour « Terminal de Paiement Electronique » équipé d'une antenne RFID. Au lieu d'insérer la carte dans le lecteur du TPE, il suffit de la positionner à proximité, dans le champ émis par l'antenne dudit terminal, pour que ce dernier la détecte et réalise les échanges avec celle-ci, en vue d'effectuer les traitements nécessaires. Toutefois, cette pratique impose une contrainte dans la réalisation des échanges avec la carte, qui doit s'opérer sur une durée courte (inférieure à la seconde), afin d'assurer complètement la transaction en un seul et simple geste de l'utilisateur, communément dénommé « tap ».

Etant donné que les terminaux portables personnels connectés à un réseau de communication sont équipés d'une carte à puce, de type UICC (pour « Universal Intefrated Circuit Card »), préférentiellement de type SIM (pour « Subscriber Identity Module »), il a été imaginé d'utiliser cette carte à puce, considérée comme un élément de mémoire embarqué amovible et sécurisé, pour y introduire les données EMV, telle que présentes au sein de la puce d'une carte bancaire. Ainsi, un téléphone portable NFC se substitue à la carte à puce bancaire et peut être utilisé de la même façon en un « tap ». Le document EP 1 965 596 divulgue un exemple de terminal portable équipé d'une carte à puce de type SIM comprenant des données EMV. La présente invention se base sur le contexte précédent et l'adapte aux transactions bancaires effectuées lors d'un paiement en ligne, dans le cadre du commerce électronique (« e-commerce ») ou du commerce mobile (« m-commerce »). Ces types de commerce s'effectuent au travers d'un réseau informatique, notamment Internet, auquel est connecté le terminal personnel d'un utilisateur.

Plus précisément, un commerçant rend accessible au travers dudit réseau, un portail de vente de produits et de services. Un tel portail est hébergé sur un serveur distant et connecté audit réseau. Il comprend aussi une interface bancaire permettant à un utilisateur de payer les produits et les services commandés via ce portail, en particulier au travers de la saisie d'informations concernant sa carte bancaire. Une telle interface bancaire met en relation le serveur dudit portail avec un ou plusieurs serveurs bancaires, en particulier le serveur bancaire du commerçant et celui de l'utilisateur. Cette interface permet donc de réaliser la transaction bancaire entre le commerçant et l'utilisateur.

Actuellement, les interfaces existantes mettent en place des étapes fastidieuses pour tenter d'authentifier de manière forte l'utilisateur, afin de se prémunir d'une utilisation frauduleuse d'une carte bancaire. Ces solutions ne permettent que difficilement d'authentifier de manière forte l'utilisateur, à l'inverse de l'utilisation d'une carte à puce bancaire par saisie d'un code PIN, ayant recours au principe de « quelque chose que l'on a avec quelque chose que l'on sait », à savoir réciproquement ladite carte bancaire et ledit code PIN associé. En d'autres termes, pour un paiement sur Internet, les banques proposent à l'utilisateur d'obtenir des informations supplémentaires par des voies de communication différentes, lesdites informations devant être saisies afin de s'assurer que la personne qui utilisent les données bancaires de la carte soit bien son propriétaire. De telles informations supplémentaires sont difficilement mémorisables, allant même jusqu'à un code unique transmis uniquement au propriétaire pour chaque transaction.

Par ailleurs, étant donné que les données bancaires saisies et transmises sur Internet peuvent être détournées, même dans le cas d'une transmission cryptée, il n'est pas envisageable de demander à l'utilisateur la saisie d'un code d'identification secret, connu de lui seul et plus facilement mémorisable. En effet, ce code pourrait alors être intercepté et détourné avec lesdites données bancaires.

La présente invention a pour but de pallier les inconvénients de l'état de la technique, en proposant un système de transmission sécurisée de données numériques au travers d'un réseau de communication. Un tel système se veut à même de reprendre les avantages des transactions bancaires réalisées sur site au moyen d'un TPE, tout en s'affranchissant de ce dernier, et en l'appliquant à des transactions bancaires réalisées au travers d'un accès à un portail hébergé sur un serveur distant.

En d'autres termes, et de façon préférentielle, l'invention prévoit de créer une architecture reprenant l'efficacité et la sécurité du paiement avec un TPE physique, en l'appliquant au paiement sur Internet via un smartphone embarquant un élément de mémoire sécurisé, telle une carte SIM bancaire.

Pour ce faire, ledit système qui prévoit une architecture spécifique, est équivalent à un terminal de paiement physique. Cette architecture est répartie au moins entre un serveur et le terminal personnel de l'utilisateur sur lequel l'acte d'achat est réalisé, tel un téléphone cellulaire, une tablette tactile, un ordinateur personnel ou analogue.

En particulier, une telle architecture présente une partie logicielle comprenant, d'une part, une interface logicielle locale installée et s'exécutant sur ledit terminal personnel pour accéder aux données personnelles de paiement et, d'autre part, du côté serveur, un module de communication avec ladite interface et de gestion desdites données personnelles de paiement, ainsi qu'un module applicatif de paiement relié à au moins un serveur bancaire distant.

Ainsi, ledit système de transmission sécurisée de données numériques opère entre un serveur et un terminal personnel au travers d'un réseau de communication, ledit système comprenant :
- ledit serveur pourvu d'un module de communication avec ledit terminal et d'un module applicatif bancaire stockés et exécutés sur ledit serveur ; et
- ledit terminal personnel pourvu de moyens de connexion audit réseau et audit module de communication ;
- ledit terminal comprenant encore des données personnelles de paiement stockées au sein d'un élément de mémoire sécurisé et au moins un canal d'accès authentifié auxdites données.

Un tel système se caractérise par le fait que :
- ledit terminal comprend une interface stockée et s'exécutant sur ledit terminal ;
- ladite interface étant connectée via lesdits moyens de connexion au module applicatif bancaire dudit serveur par l'intermédiaire dudit module de communication ;
et par le fait que :
- ladite interface consiste en un routeur d'accès auxdites données via ledit canal d'accès sécurisé et d'authentification dudit module applicatif bancaire.

Un point essentiel d'une telle architecture réside dans le rôle de routeur de l'interface logicielle locale entre le serveur distant et les données personnelles de paiement, stockées sur l'élément de mémoire sécurisé, à savoir la carte SIM EMV du smartphone.

Le routeur gère la communication avec l'élément de mémoire sécurisé au travers des canaux, existants et disponibles, d'accès aux données personnelles de paiement. Ces canaux proviennent notamment d'une interface sans contact de type NFC, ou bien une interface contact, à savoir une application logicielle permettant de dialoguer directement avec l'élément de mémoire sécurisé lorsqu'il est intégré au terminal personnel qui héberge ledit routeur.

De plus, selon d'autres caractéristiques additionnelles, ladite interface peut être un logiciel comprenant une couche de communication bas niveau ayant une fonction de type routeur permettant la communication de ladite interface avec l'élément de mémoire sécurisé contenant les données personnelles de paiement via ledit canal d'accès.

Selon un mode de réalisation particulier, ledit terminal peut comprendre des moyens de communication sans contact sous forme d'un contrôleur NFC, ledit canal d'accès étant relié audit contrôleur NFC en un point de liaison, et par le fait que ladite interface comprend des moyens de connexion audit point de liaison et de court-circuitage dudit contrôleur NFC.

Préférentiellement, ledit canal d'accès peut relier une application bancaire auxdites données et par le fait que ladite interface accède audit canal par l'intermédiaire d'une connexion à ladite application bancaire.

En particulier, ledit canal d'accès peut relier une application bancaire auxdites données et par le fait que ladite interface comprend des moyens de connexion audit canal par un point de liaison et de court-circuitage de ladite application bancaire.

De plus, ledit module de communication peut être relié à ladite interface au travers dudit réseau au moyen d'un protocole propriétaire qui encapsule les données nécessaires aux échanges normalisés, de type ISO 7816-4, avec lesdites données personnelles de paiement.

En outre, lors d'une transaction, lesdits modules et l'interface peuvent être connectés ensembles de manière à simuler un terminal de paiement à la demande au travers dudit réseau.

Par ailleurs, ledit serveur peut comprendre l'ensemble des paramètres relatifs aux commerçants stocké au sein dudit module applicatif bancaire.

Selon une caractéristique additionnelle, le terminal de paiement simulé est configuré pour un commerçant donné à chaque transaction.

D'autres caractéristiques et avantages de l'invention ressortiront de la description détaillée qui va suivre des modes de réalisation non limitatifs de l'invention, en référence aux figures annexées, dans lesquelles :
- la figure 1 représente une vue schématisée d'un premier mode de réalisation de l'architecture dudit système, dans lequel l'interface accède au canal de communication entre l'application bancaire et les données personnelles ;
- la figure 2 représente une vue schématisée d'un deuxième mode de réalisation de l'architecture, dans lequel l'interface accède aux données par l'intermédiaire de ladite application bancaire ; et
- la figure 3 représente une vue schématisée d'un troisième mode de réalisation de l'architecture, dans lequel l'interface utilise un point d'accès au canal de connexion entre les données et un contrôleur sans contact, pour court-circuiter cette connexion.

La présente invention concerne un système 1 de transmission sécurisée de données numériques au travers d'un réseau de communication 2, plus particulièrement un réseau de télécommunication. Il peut aussi consister, au moins en partie, en un réseau informatique, préférentiellement Internet, et au moins en partie en un réseau de télécommunication téléphonique, préférentiellement de télécommunication mobile.

De plus, ledit système 1 effectue une transmission de données entre un serveur 4 et un terminal personnel 3 au travers dudit réseau 2 de communication.

Ledit système 1 comprend une architecture répartie entre un terminal personnel 3 à un utilisateur et un serveur distant 4, ces deux éléments étant reliés au travers dudit réseau 2.

En outre, ledit terminal personnel 3 peut être prévu portable, comme un téléphone cellulaire, de type « smartphone », mais aussi une tablette tactile, un assistant personnel électronique PDA (pour « Personal Digital Assistant »), voire d'autres types de terminaux comme par exemple un ordinateur portable ou fixe ou une télévision connectée à Internet.

De plus, ledit terminal personnel 3 est pourvu de moyens 30 de connexion audit réseau 2.

Dès lors que les couches TCP IP (pour « Transmission Control Protocol » et « Internet Protocol ») sont implémentées, ledit réseau 2 peut aussi consister en partie en au moins un réseau de télécommunication téléphonique sans fil de type hertzien ou analogue, en particulier pour la communication mobile via un téléphone cellulaire.

Par ailleurs, dans l'application préférentielle d'échanges transactionnels, le terminal personnel 3 intègre des données personnelles de paiement 5 stockées au sein d'un élément de mémoire sécurisé 10 et au moins un canal 100 d'accès authentifié auxdites données 5. On notera que ledit élément de mémoire sécurisé peut par exemple être une carte SIM 10.

Selon le mode préférentiel de réalisation, lesdites données 5 sont normalisées et de type bancaires, de préférence au format EMV, dites « données EMV » (pour « EurocardMasterCardVisa »), ou bien formalisées sous une autre norme, notamment une norme bancaire. En somme, dans le cas d'un terminal 3 sous forme d'un téléphone cellulaire, les données bancaires sont stockées au sein d'un espace mémoire dédié, par exemple sa carte SIM.

De plus, ledit serveur distant 4 peut être connecté, au travers dudit réseau 2 ou bien d'un réseau connexe, à des serveurs bancaires 6 distincts pour la gestion d'autorisation de paiement et ou la remise de transaction.

Avantageusement, ladite architecture selon l'invention comprend, d'une part, une interface logicielle locale 7, installée et s'exécutant sur ledit terminal 3, pour accéder aux données personnelles de paiement 5 stockées sur l'élément de mémoire sécurisée contenu au sein de ce terminal personnel 3.

D'autre part, du côté serveur 4, l'architecture comprend un module de communication 8 avec ladite interface 7 et de gestion desdites données 5, ainsi qu'un module applicatif bancaire 9. Ces modules sont stockés et exécutés sur ledit serveur 4. Comme évoqué précédemment, ce dernier peut être relié au moins à un desdits serveurs bancaires distants 6 au travers dudit module 9. De plus, ledit terminal personnel 3 est pourvu de moyens 30 de connexion audit réseau 2 et audit module de communication 8. En somme, ladite interface 7 est connectée via lesdits moyens de connexion 30 au module applicatif bancaire 9 dudit serveur 4 par l'intermédiaire dudit module de communication 8.

En somme, une caractéristique essentielle de la présente invention réside dans la séparation d'un ensemble unique, actuellement contenu dans un terminal de paiement physique, en deux parties distinctes du côté client par ladite interface 7 et du côté serveur 4 avec les modules 8 et 9, lesdites parties étant fortement liées entre elles au travers du réseau 2. Cet ensemble, lors de la transaction, constitue un terminal de paiement électronique virtuel et de façon temporaire. Plus précisément, l'invention se veut à même de simuler un terminal de paiement électronique, utilisant ces outils physiques et logiciels, pour simuler un tel terminal.

De plus, le fonctionnement de chacune des parties client et serveur s'effectue différemment. En effet, ladite interface 7 est un logiciel « léger », à savoir qu'il comprend une couche de communication bas niveau ayant une fonction de type routeur. Cette dernière permet la communication de ladite interface 7 directement avec les données 5 stockées au sein dudit terminal 3, via ledit canal d'accès sécurisé 100.

Plus précisément, le logiciel de ladite interface 7 est programmé au niveau matériel en dehors de la couche applicative, à savoir qu'il opère au niveau d'au moins l'une des couches suivantes : transport, session ou présentation (selon le modèle OSI pour « Open Systems Interconnection » ou « interconnexion de systèmes ouverts »). Ce logiciel intervient comme convertisseur de protocole entre les échanges avec le serveur 4 et les échanges avec les données 5, suivant un protocole normalisé d'encapsulation des données lors de leurs échanges, en particulier le protocole ISO7816-4.

Dès lors, ladite interface 7 consiste en un routeur d'accès auxdites données 5 via ledit canal 100 d'accès sécurisé et d'authentification dudit module applicatif bancaire 9.

En somme, la fonction de type routeur de l'interface 7 consiste en un traitement de conversion des données reçues depuis le module de communication 8 vers l'élément de mémoire sécurisé, de type carte SIM, et inversement. Cette conversion permet de transcrire les données reçues et envoyées aux différents formats et de les encapsuler en paquets suivant les protocoles respectifs utilisés.

Avantageusement, de façon globale, cette interface 7 est programmée au niveau matériel afin de communiquer avec les données stockées 5 dans l'élément de mémoire sécurisé 10, via le canal d'accès 100. En particulier, ladite interface 7 comprend des moyens d'authentification permettant d'accéder directement auxdites données 5.

On notera que cette authentification peut être soumise à des protocoles et des clefs d'accès dédiés et spécifiques à chaque données 5, notamment des protocoles et des clefs bancaires. Ces protocoles et paramètres d'authentification bancaire sont préférentiellement dédiés au format EMV des données 5.

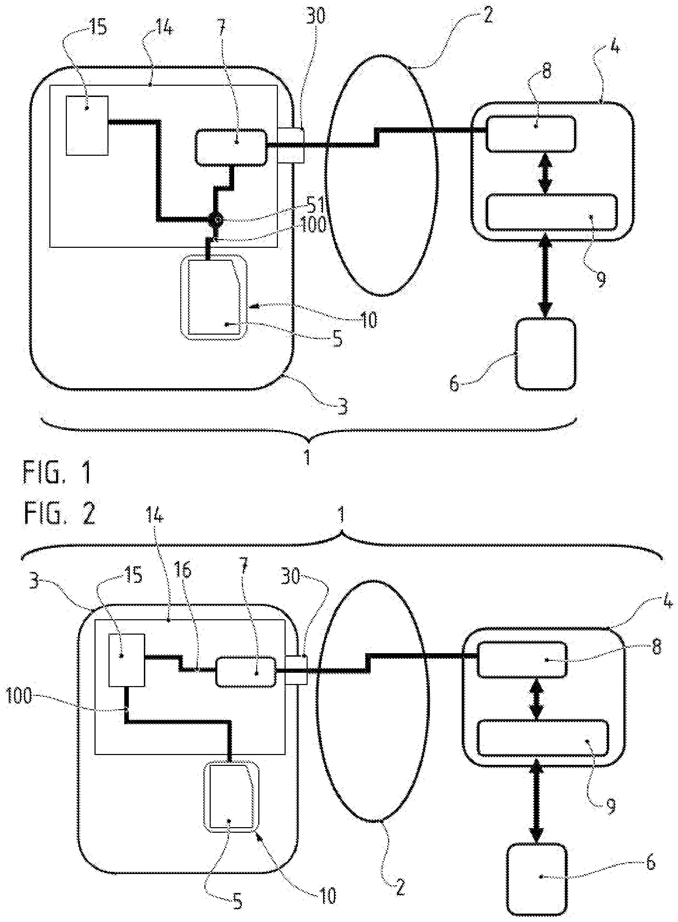

Selon un premier mode de réalisation, représenté sur la figure 1, ledit terminal 3 comprend une application bancaire 15, installée et exécutée localement au sein de la mémoire interne 14 du terminal 3. Ladite application 15 est reliée par ledit canal d'accès 100 auxdites données 5. En somme, c'est cette application bancaire 15 qui détient les protocoles et les clefs d'authentification permettant à l'utilisateur d'être authentifié et d'accéder aux données 5.

En d'autres termes, ladite application bancaire 15 est dédiée au format de données bancaires 5 stockées au sein de l'élément sécurisé 10. En effet, lors de l'installation desdites données 5 au sein d'une carte SIM 10, c'est la banque de l'utilisateur qui personnalise ladite carte SIM 10. Elle est alors configurée pour n'accepter que l'interaction avec une application bancaire 15 spécifique à ladite banque.

En particulier, dans le cas de donnée 5 au format du standard EMV, l'application bancaire 15 comprend une API UICC (pour « Application Programming Interface ») permettant de communiquer avec le microcontrôleur d'accès à la mémoire de la carte à puce stockant les données 5, en particulier l'espace sécurisé enfermant ces données bancaires 5.

Un exemple de standard existant a été détaillé dans les spécifications AEPM (pour « Association Européen Payez Mobile »), utilisant notamment le langage informatique Java et une machine virtuelle JAVA (JVM pour « Java Virtual Machine ») dans un environnement JCRE (pour « Java Card Run Time Environnement »).

Avantageusement, l'interface 7 accède directement, au niveau matériel, audit canal 100, en particulier au niveau d'un point de jonction 51.

Dans ce cas, l'interface 7 permet de récupérer les informations échangées avec l'application 15, pour les utiliser directement avec les données bancaires 5.

Un second mode de réalisation, représenté sur la figure 2, est similaire au précédent, en ce que c'est l'application bancaire 15 qui accède aux données 5 par le canal 100.

La différence réside dans le fait que, dans cette configuration, ladite interface 7, programmée au niveau matériel, accède audit canal 100 par l'intermédiaire d'une connexion 16 à ladite application bancaire 15. La connexion 16 de l'interface 7, programmée au niveau matériel comme évoqué précédemment, consiste alors en une interface logicielle, de plus haut niveau dans la couche applicative, afin de permettre de communiquer avec l'application 15. Cette dernière fait donc office de passerelle pour que l'interface 7 accède aux données 5.

De plus, dans ce mode de réalisation, une méthode d'authentification supplémentaire est mise en oeuvre entre l'application bancaire 15 et le routeur 7. Une telle méthode peut aussi être commune à la méthode d'identification de l'utilisateur, déjà existante, pour accéder à ladite application bancaire 15.

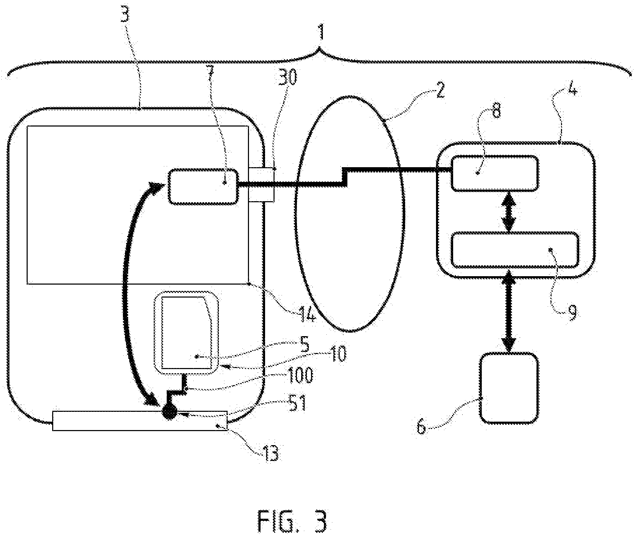

Selon un autre mode particulier de réalisation, visible sur la figure 3, ledit terminal 3 comprend des moyens de communication sans contact, sous forme d'un contrôleur NFC 13. Ledit canal d'accès 100 est alors relié audit contrôleur NFC en un point de liaison 51.

On notera que, selon un mode spécifique de réalisation, avec la même configuration, une application bancaire 15 peut aussi être connectée auxdites données 5.

Dès lors, l'interface 7 comprend des moyens de connexion audit point de liaison 51 et de court-circuitage dudit contrôleur NFC.

En d'autres termes lorsque l'interface 7 communique avec le contrôleur NFC 13, celle-ci permet de simuler un terminal de paiement, en lieu et place d'un terminal de paiement physique utilisé normalement pour effectuer un paiement sans contact. Ainsi, le contrôleur NFC 13 croit être en présence d'un terminal de paiement et demande l'accès aux données 5.

Pour ce faire, les moyens de court-circuitage se connectent au point de liaison 51 du contrôleur NFC, pour dérouter et utiliser sa transmission existante vers l'élément sécurisé 10 et les données qu'il renferme. Ainsi, l'interface 7 ne requiert ainsi pas de clefs d'authentification.

On notera que l'interface 7 intègre uniquement les protocoles et les paramètres d'échange, permettant à l'interface 7 de se connecter audit point 51 et de communiquer par l'intermédiaire du contrôleur NFC 13.Plus précisément, l'interface 7 communique avec le contrôleur NFC 13 pour simuler un terminal de paiement virtuel, en lieu et place d'un terminal de paiement physique utilisé normalement pour effectuer un paiement sans contact.

Ainsi, le contrôleur NFC 13 croit être en présence d'un terminal de paiement physique et demande l'accès aux données 5. Dès lors, l'interface 7 court-circuite l'envoi des données par ledit contrôleur NFC 13 vers un terminal de paiement physique inexistant, pour les récupérer et s'en servir au travers d'un autre réseau de communication 2, notamment Internet.

En outre, elle reprend les protocoles d'échanges utilisés usuellement entre ledit contrôleur NFC 13 et un terminal de paiement physique, de sorte que le contrôleur NFC 13 croit être en présence d'un tel terminal physique.

Plus précisément, selon un mode de réalisation particulier, l'interface 7 possède un module logiciel d'aiguillage des échanges entre les données 5 et le contrôleur NFC 13, en particulier son antenne RFID. Ce module d'aiguillage est préférentiellement de type « switch controler », permettant de re-router ces échanges vers l'interface 7 en lieu et place du contrôleur NFC 13 et de son antenne RFID.

Par ailleurs, la communication entre l'interface 7 et le serveur 4 s'effectue à partir dudit module de communication 8 au moyen d'un protocole d'échange pour permettre l'accès aux données 5 à travers le réseau 2 et les moyens de connexion via ladite interface 7. Un tel protocole assure une connexion sécurisée au travers du réseau 2 entre l'interface 7 et le module 8, avec un chiffrement des données et une authentification du serveur 4, notamment au moyen de protocoles sécurisés de communication, comme par exemple SSL pour « Secure Socket Layer » ou TLS pour « Transport Layer Security », ou bien HTTPS pour « HyperText Transfert Protocol Secure ».

Par ailleurs, ledit module de communication 8 s'exécutant sur le serveur 4 est dédié à la gestion des données personnelles de paiement. Il s'agit d'une application logicielle qui gère les échanges avec l'élément sécurisé contenant les données 5 pour réaliser les différentes phases d'une transaction, à savoir de façon non exhaustive : sélection d'application, authentification carte, authentification porteur si requise, génération du ou des certificats.

De plus, ledit module 8 communique les informations issues des données 5 au module applicatif bancaire 9 et nécessaires aux traitements de contrôle bancaire acquéreur et émetteur. Ces informations sont transmises du module 8 vers le module 9 et inversement par partage d'un objet mémoire du serveur 4. En effet, ce module applicatif bancaire 9 assure le traitement des données 5 présentes sur la carte SIM 10 et la connexion avec un des serveurs bancaires distants 6.

On notera que les paramètres et données bancaires du commerçant sont stockés sur le serveur 4, au niveau dudit module bancaire 9, configurés spécifiquement pour chaque commerçant.

Avantageusement, à chaque transaction et uniquement pendant sa durée, des paramètres dudit commerçant sont activés et transmis depuis ledit module applicatif bancaire 9 vers ladite interface 7. En somme, l'architecture selon l'invention regroupe et connecte, au moment d'effectuer une transaction bancaire, l'interface 7 au niveau du client, le module 8 et le module applicatif bancaire 9 au niveau du serveur 4, permettant de simuler provisoirement un TPE, qui est assimilé comme un véritable terminal de paiement physique. Une fois la transaction finalisée, l'interface 7 ne conserve aucun des paramètres relatifs au commerçant, ne stockant pas de données sensibles au niveau dudit terminal 3.

Selon les modes de réalisation, représenté sur les figures, l'interface 7 est directement installée au sein dudit terminal 3, dans sa mémoire interne 14, et s'exécute localement sur ce dernier. Du côté serveur 4, les modules 8 et 9 assurent leur rôle respectif.

Dans le cadre d'un acte d'achat réalisé sur le terminal 3, la sélection de la fonction paiement active le routeur 7 et sa communication d'une part avec le serveur 4 et d'autre part avec l'élément sécurisé qui contient les données 5. Le contrôle du code confidentiel, lorsqu'il est requis, est géré par l'application de l'émetteur bancaire installée sur le terminal 3, elle prend notamment en charge l'interface utilisateur pour sa saisie. Le statut de la vérification du code confidentiel est une information stockée dans les données 5. Après les contrôles et autorisations nécessaires, un statut concernant la transaction est renvoyé vers l'application de vente à l'origine du paiement qui informe l'utilisateur de l'acceptation ou non du paiement.

Par ailleurs, pour une architecture donnée, l'interface 7 peut être intégrée au sein d'une application dédiée à un commerçant ou à une banque. Elle est donc installée et exécutée uniquement au sein de cette application mobile, banque ou commerçante, comme par exemple au sein de l'application bancaire 15.

Pour une autre architecture, ladite interface 7 est une application indépendante, téléchargée depuis le serveur 4 et installée lors de la première transaction ou à chaque transaction.

Ainsi, la présente invention intègre au sein d'un terminal personnel 3, notamment de type téléphone cellulaire, une interface 7 qui permet d'accéder directement aux données 5 stockées dans un élément de mémoire sécurisé, notamment dans la carte SIM 10, depuis un serveur 4 sur lequel s'exécute un module de communication 8 et un module bancaire 9, l'ensemble de ces trois éléments formant, le temps d'une transaction, un terminal de paiement électronique virtuel.

## Revendications

1. Système de transmission sécurisée de données numériques (1) adapté à permettre une transmission sécurisée entre un terminal (3) personnel et un serveur bancaire (6), le terminal (3) comprenant un élément de mémoire sécurisé (10), **caractérisé en ce que** le système de transmission sécurisée de données numériques (1) comprend une architecture répartie entre le terminal (3) et un serveur distant (4) qui est connecté au terminal (3) par un premier réseau de communication (2), le serveur distant (4) étant adapté à être connecté au serveur bancaire (6) par un second réseau de communication, le serveur distant (4) comprenant, d'une part, un module de communication (8) permettant sa connexion au premier réseau de communication (2) et, d'autre part, un module applicatif bancaire (9) connecté au module de communication (8) et adapté à être connecté au serveur bancaire (6), le module de communication (8) et le module applicatif bancaire (9) étant stockés et exécutés sur le serveur distant (4), l'élément de mémoire sécurisé (10) comprenant des données personnelles de paiement (5), le terminal (3) comprenant des moyens de connexion (30) permettant sa connexion au premier réseau de communication (2) et un canal d'accès sécurisé authentifié (100) permettant l'accès aux données personnelles de paiement (5), une interface (7), stockée et s'exécutant sur le terminal (3), étant connectée au canal d'accès sécurisé authentifié (100) et aux moyens de connexion (30) de façon à former un routeur d'accès aux données personnelles de paiement (5) et d'authentification du module applicatif bancaire (9), de sorte que l'architecture regroupe et connecte temporairement, pendant une opération de paiement, le module de communication (8), le module applicatif bancaire (9) et l'interface (7), simulant ainsi un terminal de paiement électronique.

2. Système (1) selon la revendication 1, **caractérisé en ce que** l'interface (7) est un logiciel comprenant une couche de communication bas niveau.

3. Système (1) selon l'une des revendications 1 ou 2, **caractérisé en ce que** le terminal (3)comprend des moyens de communication sans contact qui sont sous forme d'un contrôleur NFC (13) et qui sont reliés au canal d'accès sécurisé authentifié (100) en un point de liaison (51), l'interface (7) comprenant des moyens de connexion au point de liaison (51) et de court-circuitage du contrôleur NFC (13).

4. Système (1) selon l'une des revendications 1 ou 2, **caractérisé en ce que** le terminal (3) comprend une application bancaire (15) qui est reliée aux données personnelles de paiement (5) par le canal d'accès sécurisé authentifié (100), l'interface (7) accédant au canal d'accès sécurisé authentifié (100) par une connexion (16) le reliant à l'application bancaire (15).

5. Système (1) selon l'une des revendications 1 ou 2, **caractérisé en ce que** le terminal (3) comprend une application bancaire (15) qui est reliée aux données personnelles de paiement (5) par le canal d'accès sécurisé authentifié (100), l'interface (7) comprenant des moyens de connexion au canal d'accès sécurisé authentifié (100) par un point de liaison (51) et de court-circuitage de l'application bancaire (15).

6. Système (1) selon l'une des revendications 1 à 5, **caractérisé en ce que** le module de communication (8) est relié à l'interface (7) au moyen d'un protocole propriétaire qui encapsule les données nécessaires aux échanges normalisés avec les données personnelles de paiement (5).

7. Système (1) selon l'une des revendications 1 à 6, **caractérisé en ce que** le module applicatif bancaire (9) comprend l'ensemble des paramètres relatifs aux commerçants associés au paiement.

8. Système (1) selon les revendications 1 à 7, **caractérisé en ce que** le terminal de paiement électronique simulé est configuré pour chaque commerçant donné à chaque transaction.

9. Système (1) selon l'une des revendications 1 à 8, **caractérisée en ce que** l'interface (7) est programmée au niveau matériel en dehors de la couche applicative.

## Patentansprüche

1. Sicheres digitales Datenübertragungssystem (1), das angepasst ist, um eine sichere Übertragung zwischen einem persönlichen Endgerät (3) und einem Bankserver (6) zu ermöglichen, wobei das Endgerät (3) ein sicheres Speicherelement (10) umfasst, **dadurch gekennzeichnet, dass** das sichere digitale Datenübertragungssystem (1) eine zwischen dem Endgerät (3) und einem enternten Server (4), der über ein erstes Kommunikationsnetzwerk (2) mit dem Endgerät (3) verbunden ist, verteilte Architektur umfasst, wobei der enternte Server (4) angepasst ist, um über ein zweites Kommunikationsnetzwerk mit dem Bankserver (6) verbunden zu werden, wobei der entfernte Server (4) einerseits ein Kommunikationsmodul (8), das seine Verbindung mit dem ersten Kommunikationsnetzwerk (2) ermöglicht, und andererseits ein Bankenapplikationssmodul (9), das mit dem Kommunikationsmodul (8) verbunden und angepasst ist, um mit dem Bankserver (6) verbunden zu werden, umfasst, wobei deas Kommunikationsmodul (8) und das Bankenapplikationsmodul (9) auf dem entfernten Server (4) gespeichert und ausgeführt werden, wobei das sichere Speicherelement (10) persönliche Zahlungsdaten (5) umfasst, wobei das Endgerät (3) Verbindungsmittel (30), die seine Verbindung mit dem ersten Kommunikationsnetzwerk (2) ermöglichen, und einen authentifizierten sicheren Zugriffskanal (100), der den Zugriff auf die persönlichen Zahlungsdaten (5) erlaubt, umfasst, wobei eine auf dem Endgerät (3) gespeicherte und laufende Schnittstelle (7) mit dem authentifizierten sicheren Zugriffskanal (100) und den Verbindungsmitteln (30) verbunden ist, um einen Router für den Zugriff auf die persönlichen Zahlungsdaten (5) und die Authentifizierung des Bankenapplikationsmoduls (9) zu bilden, so dass die Architektur während einer Zahlungstransaktion das Kommunikationsmodul (8), das Bankenapplikationsmodul (9) und die Schnittstelle (7) vorübergehend zusammenfügt und verbindet, wodurch ein elektronisches Zahlungsendgerät simuliert wird.

2. System (1) nach Anspruch 1, **dadurch gekennzeichnet, dass** die Schnittstelle (7) eine Software ist, die eine Low-Level-Kommunikationsschicht umfasst.

3. System (1) nach einem der Ansprüche 1 oder 2, **dadurch gekennzeichnet, dass** das Endgerät (3) kontaktlose Kommunikationsmittel umfasst, die als eine NFC-Steuerung (13) ausgebildet und an einem Verbindungspunkt (51) mit dem authentifizierten sicheren Zugriffskanal verbunden sind (100), wobei die Schnittstelle (7) Mittel zum Verbinden mit dem Verbindungspunkt (51) und zum Kurzschließen der NFC-Steuerung (13) umfasst.

4. System (1) nach einem der Ansprüche 1 oder 2, **dadurch gekennzeichnet, dass** das Endgerät (3) eine Bankenapplikation (15) umfasst, die über den authentifizierten sicheren Zugriffskanal (100) mit den persönlichen Zahlungsdaten (5) verbunden ist, wobei die Schnittstelle (7) über eine Verbindung (16), die sie mit der Bankenapplikation (15) verbindet, auf den authentifizierten sicheren Zugriffskanal (100) zugreift.

5. System (1) nach einem der Ansprüche 1 oder 2, **dadurch gekennzeichnet, dass** das Endgerät (3) eine Bankenapplikation (15) umfasst, die über den authentifizierten sicheren Zugriffskanal (100) mit den persönlichen Zahlungsdaten (5) verbunden ist, wobei die Schnittstelle (7) Mittel zur Verbindung über einen Verbindungspunkt (51) mit dem authentifizierten sicheren Zugriffskanal (100) und zum Kurzschließen der Bankenapplikation (15) umfasst.

6. System (1) nach einem der Ansprüche 1 bis 5, **dadurch gekennzeichnet, dass** das Kommunikationsmodul (8) mit der Schnittstelle (7) mittels eines proprietären Protokolls verbunden ist, das die für den normalisierten Austausch mit den persönlichen Zahlungsdaten (5) notwendigen Daten einkapselt.

7. System (1) nach einem der Ansprüche 1 bis 6, **dadurch gekennzeichnet, dass** das Bankenapplikationsmodul (9) alle Parameter umfasst, die sich auf die in der Zahlung einbetroffenen Händler beziehen.

8. System (1) nach den Ansprüchen 1 bis 7, **dadurch gekennzeichnet, dass** das simulierte elektronische Zahlungsterminal für jeden Händler bei jeder Transaktion konfiguriert ist.

9. System (1) nach einem der Ansprüche 1 bis 8, **dadurch gekennzeichnet, dass** die Schnittstelle (7) auf Hardwareebene außerhalb der Applikationsschicht programmiert ist.

## Claims

1. A secure digital data transmission system (1) adapted to permit a secure transmission between a personal terminal (3) and a bank server (6), the terminal (3) comprising a secure memory element (10), wherein the secure digital data transmission system (1) comprises an architecture distributed between the terminal (3) and a remote server (4), which is connected to the terminal (3) through a first communication network (2), the remote server (4) being adapted to be connected to the bank server (6) through a second communication network, the remote server (4) comprising, on the one hand, a communication module (8) permitting its connection to the first communication network (2) and, on the other hand, a bank application module (9) connected to the communication module (8) and adapted to be connected to the bank server (6), the communication module (8) and the bank application module (9) being stored and executed on the remote server (4), the secure memory element (10) comprising personal payment data (5), the terminal (3) comprising connection means (30) permitting its connection to the first communication network (2) and an authenticated secure access channel (100) permitting the access to the personal payment data (5), an interface (7), stored and running on the terminal (3), being connected to the authenticated secure access (100) and to the connection means (30) so as to form a router for access to the personal payment (5) and authentication data of the banking application module (9), so that the architecture groups and temporarily connects, during a payment operation, the communication module (8), the bank application module (9) and the interface (7), thereby simulating an electronic payment terminal.

2. The system (1) according to claim 1, wherein the interface (7) is a software comprising a low-level communication layer.

3. The system (1) according to one of claims 1 or 2, wherein the terminal (3) comprises contactless communication means, which are in the form of a NFC controller (13) and which are connected to the authenticated secure access channel (100) at a connecting point (51), the interface (7) comprising means for connecting to the connecting point (51) and short-circuiting of the NFC controller (13).

4. The system (1) according to one of claims 1 or 2, wherein the terminal (3) comprises a banking application (15), which is connected to the personal payment data (5) through the authenticated secure access channel (100), the interface (7) accessing the authenticated secure access channel (100) through a connection (16) connecting it to the banking application (15).

5. The system (1) according to one of claims 1 or 2, wherein the terminal (3) comprises a banking application (15), which is connected to the personal payment data (5) through the authenticated secure access channel (100), the interface (7) comprising means for connecting to the authenticated secure access channel (100) through a connecting point (51) and short-circuiting the banking application (15).

6. The system (1) according to one of claims 1 to 5, wherein the communication module (8) is connected to the interface (7) by means of a proprietary protocol that encapsulates the data necessary for the standardized exchanges with the personal payment data (5).

7. The system (1) according to one of claims 1 to 6, wherein the bank application module (9) comprises all the parameters relating to the traders associated with the payment.

8. The system (1) according to claims 1 to 7, wherein the simulated electronic payment terminal is configured for each given trader in each transaction.

9. The system (1) according to one of claims 1 to 8, wherein the interface (7) is programmed at the hardware level outside the application layer.
